# EUROPÄISCHE PATENTSCHRIFT

(11) **EP 3 810 488 B1**
(45) Veröffentlichungstag und Bekanntmachung des Hinweises auf die Patenterteilung: **05.04.2023**
(21) Anmeldenummer: 19742278.5
(22) Anmeldetag: 24.05.2019
(51) Int. Cl.: B62D 15/02

(54) **PARKASSISTENZSYSTEM ZUM AUTOMATISIERTEN AUSPARKEN AUS EINER LÄNGSPARKLÜCKE MIT EINEM RÜCKWÄRTSZUG ALS LETZTEM AUSPARKZUG**
PARKING ASSISTANCE SYSTEM FOR AUTOMATED PULLING-OUT OF A LONGITUDINAL PARKING SPACE WITH A REVERSING MOVE AS THE LAST PULLING-OUT MOVE
SYSTÈME D'AIDE AU STATIONNEMENT POUR LA SORTIE AUTOMATISÉE À PARTIR D'UNE PLACE DE STATIONNEMENT LONGITUDINAL AVEC UN TRAIN DE MARCHE ARRIÈRE COMME DERNIER TRAIN DE STATIONNEMENT

(30) Priorität: 19.06.2018 DE 102018209865
(43) Veröffentlichungstag der Anmeldung: 28.04.2021
(73) Patentinhaber: Bayerische Motoren Werke Aktiengesellschaft, 80809 München (DE)
(72) Erfinder: NAGI, Ramy, 80799 München (DE); CHEN, Sofie, 80336 München (DE); GUTSCH, Felix, 81547 München (DE)
(86) Internationale Anmeldenummer: PCT/DE2019/100459
(87) Internationale Veröffentlichungsnummer: WO 2019/242796

(56) Entgegenhaltungen:
- WO-A1-2009/121534
- DE-A1-102008 017 030
- DE-A1-102008 025 219

## Beschreibung

Die Erfindung betrifft ein Parkassistenzsystem für ein Kraftfahrzeug zum automatisierten Ausparken mit zumindest automatisierter Querführung aus einer Längsparklücke. Ferner betrifft die Erfindung ein Verfahren zum Ausparken aus einer Längsparklücke.

Bei Parkassistenzsystemen mit automatisierter Querführung wird die Lenkung des Kraftfahrzeugs während des Parkvorgangs vom System übernommen. Die Längsführung muss der Fahrer durch entsprechendes Beschleunigen und Bremsen selbst übernehmen. Bei Parkassistenzsystemen mit automatisierter Querführung und automatisierter Längsführung wird auch die Aufgabe der Längsführung je nach Automatisierungsgrad der Längsführung teilweise oder vollständig vom Parkassistenzsystem übernommen. Bei Parkassistenzsystemen mit automatisierter Querführung und automatisierter Längsführung werden im Allgemeinen die Lenkung, die Bremse, der Fahrzeugantrieb und die Fahrtrichtung (Vorwärts- oder Rückwärtsfahrt) vom Parkassistenzsystem gesteuert. Bei derartigen Parkassistenzsystemen hat der Fahrer beispielsweise die Möglichkeit, per Betätigung eines Bedienelements im Fahrzeugcockpit, beispielsweise einer Taste, das Fahrzeug selbständig zu parken; es kann vorgesehen sein, dass das Bedienelement während des Parkmanövers weiterhin betätigt werden muss. Es wäre auch denkbar, dass das Parkassistenzsystem per Fernbedienung von außerhalb des Fahrzeugs fernbedient wird und sich während des Parkmanövers kein Fahrer im Fahrzeug befindet.

Ein beispielhaftes Parkassistenzsystem mit automatisierter Quer- und Längsführung ist in der Druckschrift "Parkassistent mit Längs- und Querführung", Dirk Ahrens, 5. Tagung Fahrerassistenz der TU München, München, 2012 beschrieben, die beispielsweise unter dem Link "http://mediatum.ub.tum.de/doc/1142099/1142099.pdf" im Internet abrufbar ist.

Parkassistenzsysteme umfassen normalerweise eine Einparkfunktion zum automatisierten Einparken in Längsparklücken und/oder Querparklücken, optional kann auch eine Ausparkfunktion zum automatisierten Ausparken vorgesehen sein.

Bekannte Parkassistenzsysteme unterstützen im Allgemeinen das rückwärtige Einparken längs zur Fahrbahn in eine parallel zu Fahrbahn liegende Längsparklücke, wobei das Fahrzeug rückwärts mit automatisierter Querführung und gegebenenfalls automatisierter Längsführung in einem oder mehreren Zügen entlang einer berechneten Einparktrajektorie in die Längsparklücke einparkt.

Es ist ferner bekannt, dass Parkassistenzsysteme auch das Ausparken aus einer Längsparklücke mit automatisierter Querführung und gegebenenfalls automatisierter Längsführung unterstützen. Hierbei wird das Fahrzeug aus einer Längsparklücke mit automatisierter Querführung und vorzugsweise auch automatisierter Längsführung rangiert und das Fahrzeug am Ende an den Fahrer übergeben. Sofern nur eine automatisierte Querführung vorgesehen ist, führt der Fahrer die Längsführung manuell durch, wobei der Fahrer bei entsprechender Vorgabe durch das Parkassistenzsystem die Fahrtrichtung entsprechend umschaltet. DE 10 2008 017030 offenbart ein Parkassistenzsystem für ein Kraftfahrzeug zum automatisierten Ausparken mit zumindest automatisierter Querführung aus einer Längsparklücke, wobei der automatisierte Ausparkvorgang mehrere Ausparkzüge umfasst, und das Parkassistenzsystem eingerichtet ist, vor der Übergabe an den Fahrer als letzten Zug des automatisierten Ausparkvorgangs einen S-förmigen Rückwärtszug automatisiert durchzuführen, und danach an den Fahrer zu übergeben.

Während des Ausparkmanövers wird das Fahrzeug beispielsweise zunächst rückwärts parallel zur Fahrbahnbegrenzung in einem ersten Rückwärtszug zurückgeführt, dann mit Lenkeinschlag zur Ausparkseite in Vorwärtsrichtung vorwärtsgeführt und dann - sofern nötig - rückwärts mit Lenkeinschlag entgegen der Ausparkseite in einem Rückwärtszug zurückgeführt. Sofern nötig, können danach ein oder mehrere Vorwärtszüge mit Lenkeinschlag zur Ausparkseite oder Rückwärtszüge mit Lenkeinschlag entgegen der Ausparkseite durchgeführt werden.

Es wird darauf hingewiesen, dass der erste Zug nicht zwingend ein gerader Rückwärtszug sein muss: Vorzugsweise wird (in Abhängigkeit der Abstände zum vorderen Begrenzungsfahrzeug und zum hinteren Begrenzungsfahrzeug) entschieden, ob der erste Zug ein gerader Rückwärtszug oder ein gelenkter Vorwärtszug ist. Ein gelenkter Vorwärtszug als erster Zug ist beispielsweise dann sinnvoll, wenn vor Beginn des Parkmanövers zum hinteren Fahrzeug ein sehr geringer Abstand besteht, während zum vorderen Fahrzeug ein größerer Abstand besteht.

Eine Übergabe an den Fahrer nach Ende des Ausparkmanövers findet beispielsweise statt, wenn das Fahrzeug das vordere Begrenzungsobjekt unter Einhaltung eines vorgegebenen Sicherheitsabstands kollisionsfrei passieren kann. Je nach Manöververlauf kann es vorkommen, dass die Übergabe dann stattfindet, wenn das Fahrzeug mit der Front bereits weit aus der Parklücke herausragt, beispielsweise wenn die Übergabe am Ende eines Vorwärtszuges stattfindet.

Da der Übergabeprozess an den Fahrer und die Übernahme durch den Fahrer typischerweise eine gewisse Zeit benötigt, behindert das Fahrzeug den auf der Fahrbahn nachfolgenden Verkehr, wenn das Fahrzeug in der Übergabeposition bereits weit in der Fahrbahn hineinragt.

Es ist Aufgabe der Erfindung, Parkassistenzsysteme zum Ausparken und entsprechende Verfahren zum Ausparken anzugeben, welche diesen Nachteil ausräumt.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Anmeldung betrifft ein Parkassistenzsystem für ein Kraftfahrzeug, beispielsweise für einen Personenkraftwagen, zum automatisierten Ausparken mit zumindest automatisierter Querführung aus einer Längsparklücke. Vorzugsweise wird auch die Längsführung inklusive Umschaltung der Fahrtrichtung über ein Automatikgetriebe während des Ausparkvorgangs vom Parkassistenzsystem übernommen. Es wäre aber auch denkbar, dass das Parkassistenzsystem die Lenkung während des Ausparkmanövers durchführt und der Fahrer auf Anweisung des Assistenzsystems das Fahrzeug manuell beschleunigt und bremst sowie die Fahrtrichtung durch Betätigung eines Gangwahlbedienelements umschaltet, insbesondere im Fall eines Kraftfahrzeugs mit Handschaltgetriebe.

Gemäß einer bevorzugten Ausführungsform wird das automatisierte Ausparkmanöver vom Fahrer über eine Bedienhandlung im Cockpit ausgelöst, wobei sich der Fahrer während des automatisierten Parkmanövers am Fahrerplatz im Fahrzeug befindet. Es wäre aber auch denkbar, dass das Parkassistenzsystem per Fernbedienung von außerhalb des Fahrzeugs fernbedient wird und sich während des Parkmanövers kein Fahrer im Fahrzeug befindet.

Das Parkassistenzsystem dient vorzugsweise auch zum Einparken in eine Längsparklücke. Dies ist jedoch nicht zwingend: Es wäre denkbar, dass das Parkassistenzsystem lediglich zum Ausparken verwendet werden kann.

Sofern das Parkassistenzsystem auch zum Einparken dient, kann vorgesehen sein, dass lediglich aus einer Parklücke ausgeparkt werden kann, wenn auch in diese Parklücke bereits automatisiert über das Parkassistenzsystem eingeparkt wurde. Dies ist jedoch nicht zwingend.

Der automatisierte Ausparkvorgang umfasst mehrere Ausparkzüge.

Während des Ausparkmanövers wird das Fahrzeug beispielsweise zunächst rückwärts parallel zur Fahrbahnbegrenzung in einem ersten Rückwärtszug zurückgeführt, dann mit Lenkeinschlag zur Ausparkseite in Vorwärtsrichtung vorwärtsgeführt.

Das Parkassistenzsystem ist eingerichtet, verschiedene nachfolgend beschriebene Tätigkeiten durchzuführen. Dies erfolgt typischerweise mittels einer elektronischen Steuereinheit, die auch über mehrere Steuergeräte verteilt sein kann. Die Steuereinheit kann einen oder mehrere Prozessoren umfassen, die über einen oder mehrere Software-Programme gesteuert in erfindungsgemäßer Weise arbeiten.

Das Parkassistenzsystem ist eingerichtet, vor der Übergabe an den Fahrer als letzten Zug des automatisierten Ausparkvorgangs einen im Wesentlichen geraden Rückwärtszug automatisiert durchzuführen (je nach Systemausprägung lediglich mit Querführung oder mit Längs- und Querführung) und danach an den Fahrer zu übergeben, beispielsweise nachdem das Fahrzeug festgebremst wird und die Räder in Ausparkseite eingeschlagen worden sind. Beispielsweise wird hierzu ein entsprechender Übergabehinweis auf einem Bildschirm im Cockpit ausgegeben, beispielweise "Bitte Fahraufgabe übernehmen". Es kann vorgesehen sein, dass der Fahrer die Führung über das Fahrzeug durch eine einfache Betätigung des Fahrpedals übernehmen kann.

Durch den Rückwärtszug als letzten Zug des automatisierten Ausparkvorgangs befindet sich das Fahrzeug an der Übergabeposition weiter in der Parklücke als ohne Rückwärtszug. Die Fahraufgabe wird im Vergleich zu einer Übergabe nach einem Vorwärtszug in einer sichereren Position an den Fahrer übergeben. Der nachfolgende Verkehr wird nicht durch ein außerhalb der Parklücke stehendes Fahrzeug behindert.

Dadurch dass der Rückwärtszug ein im Wesentlichen gerader Rückwärtszug ist, ist das Fahrzeug im Unterschied zu einem Rückwärtszug mit Lenkeinschlag entgegen der Richtung der Ausparkseite am Ende des Rückwärtszugs weniger in die Fahrbahn hineingedreht, ragt damit weniger aus der Parklücke heraus und ist damit für den nachfolgenden Verkehr kaum oder überhaupt nicht störend.

Es wäre denkbar, dass das Parkassistenzsystem vor dem im Wesentlichen geraden Rückwärtszug feststellt (beispielsweise während des Vorwärtszugs oder nach Ende des Vorwärtszuges), dass eine zulässige Übergabeposition mit Ende eines Vorwärtszuges erreicht ist, in der der Fahrer einzügig in einem manuell durchgeführten Vorwärtszug unter Einhalten eines Abstandskriteriums die Parklücke kollisionsfrei verlassen könnte (d. h. ein kollisionsfreies Passieren des vorderen Begrenzungsobjekts der Parklücke möglich wäre), und daraufhin den im Wesentlichen geraden Rückwärtszug durchführt, um das Fahrzeug wieder tiefer in die Parklücke zu positionieren.

Vorzugsweise ist das Parkassistenzsystem aber eingerichtet, vor dem automatisiert durchgeführten im Wesentlichen geraden Rückwärtszug festzustellen, dass das Fahrzeug nach dem zukünftigen, automatisiert durchgeführten Rückwärtszug einzügig in einem vom Fahrer manuell durchgeführten Vorwärtszug unter Einhaltung eines Abstandskriteriums (beispielweise mit einem Abstand größer oder größer gleich als ein vorgegebener Schwellwert zu einem vorderen Begrenzungsobjekt der Parklücke) die Parklücke verlassen können wird. Beispielsweise wird diese Feststellung während des Ausparkmanövers getroffen, beispielweise in einem automatisiert durchgeführten Vorwärtszug vor dem automatisiert durchgeführten im Wesentlichen geraden Rückwärtszug oder nach Ende dieses Vorwärtszugs. Diese Feststellung kann aber bereits auch im Rahmen einer Bahnplanung vor Beginn des Ausparkmanövers getroffen werden. Vorzugsweise wird in diesem Fall die vor dem Ausparkmanöver getroffene Feststellung während des Ausparkmanövers, beispielsweise während des dem Rückwärtszugs vorangehenden Vorwärtszugs oder unmittelbar nach Ende des Vorwärtszugs, mit dann verbesserter Information über die Lage der Objekte im Fahrzeugumfeld nochmal verifiziert.

Bei der Feststellung kann berücksichtigt werden, ob das Fahrzeug die Parklücke mit einem einzigen manuellen Vorwärtszug unter Berücksichtigung eines bestimmten Einschlags der gelenkten Räder in Richtung der Ausparkseite, insbesondere eines Volleinschlags, die Parklücke verlassen können wird. Statt eines Volleinschlags der gelenkten Räder könnte auch ein dazu geringerer Einschlag der Räder bei der Feststellung zugrunde gelegt werden.

Wenn festgestellt wurde, das Fahrzeug nach dem zukünftigen, automatisiert durchgeführten Rückwärtszug einzügig in einem vom Fahrer manuell durchgeführten Vorwärtszug unter Einhaltung eines Abstandskriteriums die Parklücke und gegebenenfalls unter Berücksichtigung eines bestimmten Lenkeinschlags verlassen können wird, wird der im Wesentlichen gerade Rückwärtszug durchgeführt.

Wenn hingegen festgestellt wird, dass das Fahrzeug die Parklücke nach dem automatisiert durchgeführten im Wesentlichen geraden Rückwärtszug einzügig in einem vom Fahrer manuell durchgeführten Vorwärtszug unter Einhaltung eines Abstandskriteriums (und gegebenenfalls unter Berücksichtigung eines bestimmten Lenkeinschlags) nicht verlassen können wird, wird statt des im Wesentlichen geraden Rückwärtszugs ein Rückwärtszug mit Lenkeinschlag entgegen der Ausparkseite automatisiert durchgeführt.

Hier kann vorzugsweise noch zwischen zwei Fällen mit Rückwärtszug mit Lenkeinschlag unterschieden werden:

In einem ersten Fall der beiden Fälle wird festgestellt, dass das Fahrzeug die Parklücke nach dem automatisiert durchgeführten im Wesentlichen geraden Rückwärtszug einzügig in einem vom Fahrer manuell durchgeführten Vorwärtszug unter Einhaltung eines Abstandskriteriums (und gegebenenfalls unter Berücksichtigung eines bestimmten Lenkeinschlags) nicht verlassen können wird, jedoch nach einem mit einem bestimmten Lenkeinschlag entgegen der Ausparkseite durchgeführten Rückwärtszug in einem vom Fahrer manuell durchgeführten Vorwärtszug unter Einhaltung eines Abstandskriteriums (und gegebenenfalls unter Berücksichtigung eines bestimmten Lenkeinschlags) verlassen können wird. In diesem ersten Fall wird der Rückwärtszug mit Lenkeinschlag entgegen der Ausparkseite als letzter Zug des automatisierten Ausparkmanövers durchgeführt und danach an den Fahrer übergeben.

Im zweiten Fall wird festgestellt, dass das Fahrzeug die Parklücke nach dem automatisiert durchgeführten im Wesentlichen geraden Rückwärtszug einzügig in einem vom Fahrer manuell durchgeführten Vorwärtszug unter Einhaltung eines Abstandskriteriums (und gegebenenfalls unter Berücksichtigung eines bestimmten Lenkeinschlags) nicht verlassen können wird, und auch nicht nach einem mit einem bestimmten Lenkeinschlag entgegen der Ausparkseite durchgeführten Rückwärtszug in einem vom Fahrer manuell durchgeführten Vorwärtszug unter Einhaltung eines Abstandskriteriums (und gegebenenfalls unter Berücksichtigung eines bestimmten Lenkeinschlags) verlassen können wird. In diesem zweiten Fall wird zwar der Rückwärtszug mit Lenkeinschlag entgegen der Ausparkseite durchgeführt, es handelt sich aber noch nicht um den letzten Zug des automatisierten Parkmanövers.

Es ist von Vorteil, wenn zum Ende des im Wesentlichen geraden Rückwärtszug hin oder nach Beendigung dieses Rückwärtszugs die Räder in Richtung Ausparkseite automatisiert gelenkt werden, insbesondere in den Volleinschlag. Das Lenken der Räder erfolgt vorzugsweise erst im Stillstand nach Beendigung dieses Rückwärtszugs. Durch Lenken der Räder in Richtung Ausparkseite wird dem Fahrer ein Fahrschlauch zum sicheren Verlassen der Parklücke vorgeben, wobei ferner der Lenkaufwand für den Fahrer entfällt.

Es ist von Vorteil, wenn das Assistenzsystem eingerichtet ist, vor dem automatisiert durchgeführten Rückwärtszug festzustellen, dass das Fahrzeug nach dem zukünftigen, automatisiert durchgeführten Rückwärtszug einzügig in einem vom Fahrer manuell durchgeführten Vorwärtszug unter Einhaltung eines Abstandskriteriums die Parklücke verlassen können wird, und in diesem Fall den Rückwärtszug automatisiert durchzuführen.

Alternativ wäre es denkbar, dass das Parkassistenzsystem vor dem Rückwärtszug feststellt (beispielsweise während des Vorwärtszugs oder unmittelbar nach Ende eines Vorwärtszuges), dass eine zulässige Übergabeposition am Ende eines Vorwärtszuges erreicht ist, in der der Fahrer in einem manuell durchgeführten Vorwärtszug unter Einhalten eines Abstandskriteriums die Parklücke einzügig kollisionsfrei verlassen könnte (d. h. ein kollisionsfreies Passieren des vorderen Begrenzungsobjekts der Parklücke möglich wäre), und daraufhin den Rückwärtszug als letzten Zug durchführt, um das Fahrzeug wieder tiefer in die Parklücke zu positionieren.

Ein zweiter Aspekt der Anmeldung betrifft ein Verfahren zum automatisierten Ausparken mit zumindest automatisierter Querführung aus einer Längsparklücke, mit den Schritten:
- vor der Übergabe an den Fahrer, automatisiertes Durchführen eines im Wesentlichen geraden Rückwärtszugs als letzten Zug des automatisierten Ausparkvorgangs, und
- danach Übergeben an den Fahrer.

Die vorstehenden Ausführungen zum erfindungsgemäßen Parkassistenzsystem nach dem ersten Aspekt der Anmeldung gelten in entsprechender Weise auch für das erfindungsgemäße Verfahren nach dem zweiten Aspekt der Anmeldung.

Ein dritter Aspekt der Erfindung betrifft eine Software mit Programmcode zur Durchführung des Verfahrens nach dem dritten und/oder vierten Aspekt der Erfindung, wenn die Software auf einer softwaregesteuerten Einrichtung abläuft, beispielsweise auf dem Prozessor eines Kraftfahrzeug-Steuergeräts.

Die Erfindung wird nachfolgend anhand eines Ausführungsbeispiels unter Zuhilfenahme der beigefügten Zeichnungen beschrieben. In diesen zeigen:
- Fig. 1: ein Ablaufdiagramm zur Funktionsweise eines Ausführungsbeispiels eines erfindungsgemäßen Parkassistenzsystems zum Ausparken; und
- Fig. 2a bis Fig. 2d: eine Draufsicht über eine beispielhafte Ausparksituation.

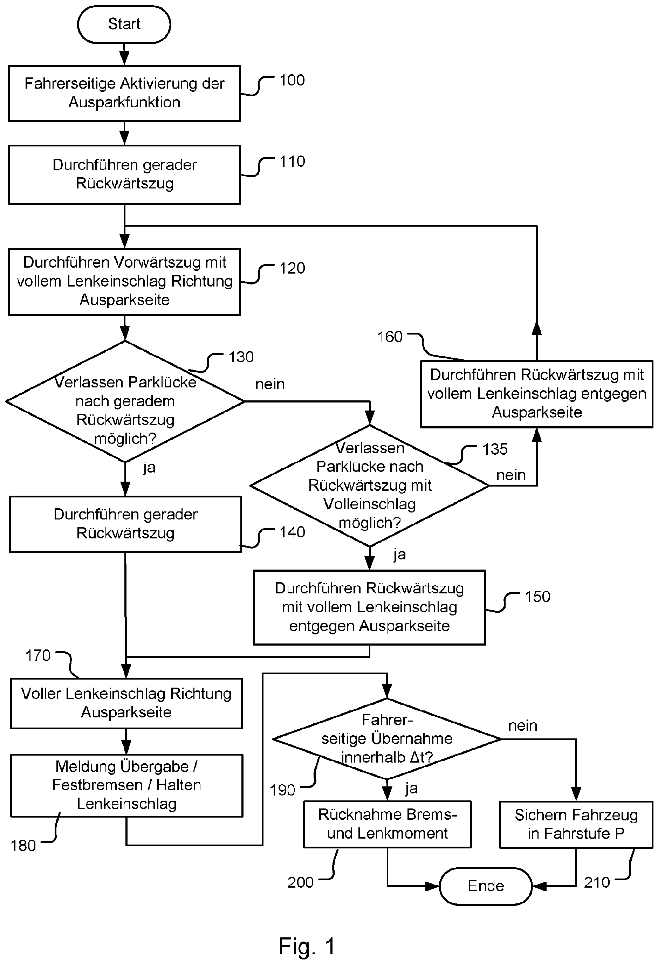

In Fig. 1 ist ein vereinfachtes Ablaufdiagramm zur Funktionsweise eines Ausführungsbeispiels eines erfindungsgemäßen Parkassistenzsystems zum Ausparken mit automatisierter Längs- und Querführung schematisch dargestellt. Das Ausführungsbeispiel lässt sich aber auf ein Parkassistenzsystem zum Ausparken mit lediglich automatisierter Querführung übertragen.

In Schritt 100 aktiviert der Fahrer die Ausparkfunktion, beispielsweise durch Einschalten der Zündung, Anwählen eines Parkmenüs auf dem Bildschirm in der Mittelkonsole durch Betätigen einer Parktaste, Auswahl der Ausparkseite und Lösen des Bremspedals.

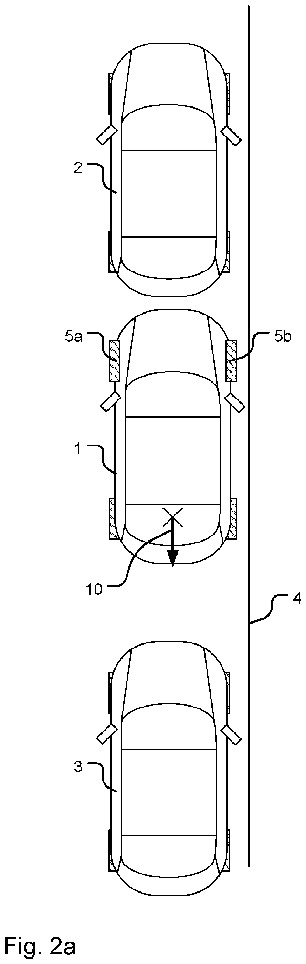

Das eigene Fahrzeug 1 befindet sich zu diesem Zeitpunkt in der in Fig. 2a dargestellten Position innerhalb der Längsparklücke, die durch das vordere Begrenzungsfahrzeug 2 und das hintere Begrenzungsfahrzeug 3 sowie seitlich durch den Bordstein 4 begrenzt wird.

Basierend auf der Information über das Fahrzeugumfeld berechnet das Parkassistenzsystem eine mehrzügige Ausparktrajektorie. Während der Durchführung des Ausparkmanövers wird diese Ausparktrajektorie basierend auf aktualisierter Information über das Fahrzeugumfeld angepasst.

Zur Vereinfachung wird in Fig. 1 davon ausgegangen, dass das automatisierte Parkmanöver in Schritt 110 mit einem geraden Rückwärtszug 10 parallel zum Bordstein 4 beginnt, wobei das Fahrzeug solange zurückgesetzt wird, bis ein bestimmter Schwellwert für den Abstand zum hinteren Fahrzeug 3 erreicht oder unterschritten wird. Hierzu wird vom Parkassistenzsystem der Rückwärtsgang eingelegt und das Fahrzeug beschleunigt und vor dem hinteren Fahrzeug zum Stillstand gebracht.

Obwohl dies in Fig. 1 aus Gründen der Vereinfachung nicht dargestellt ist, ist es von Vorteil, wenn der erste Zug nicht zwingend ein gerader Rückwärtszug sein muss, sondern (in Abhängigkeit der Abstände zum vorderen Begrenzungsfahrzeug 2 und zum hinteren Begrenzungsfahrzeug 3) stattdessen als erster Zug ein gelenkter Vorwärtszug gewählt werden kann. Ein gelenkter Vorwärtszug als erster Zug ist beispielsweise dann sinnvoll, wenn vor Beginn des Parkmanövers zum hinteren Fahrzeug 3 ein sehr geringer Abstand besteht, während zum vorderen Fahrzeug 2 ein größerer Abstand besteht.

In Fig. 2a wird der Rückwärtszug 10 durch die Bahn eines Fahrzeugbezugspunkts illustriert. Als Fahrzeugbezugspunkt wird in diesem Beispiel die Mitte der Hinterachse verwendet.

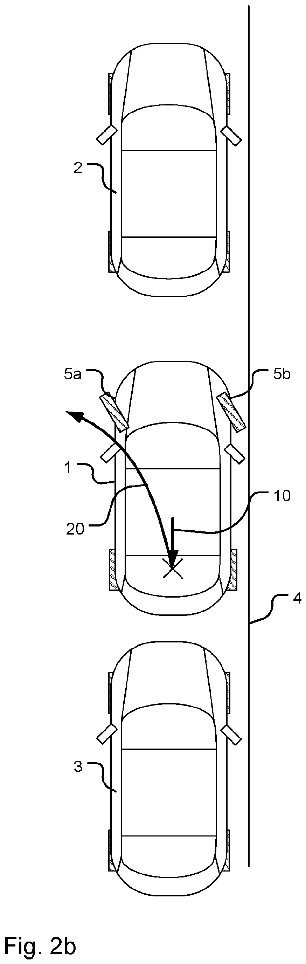

In Fig. 2b ist die Situation nach der Durchführung des initialen Rückwärtszugs dargestellt.

Die lenkbaren Räder 5a, 5b werden nun - wie bereits in Fig. 2b dargestellt - Richtung Ausparkseite voll eingeschlagen und es wird - nach automatischen Umschalten der Fahrtrichtung - ein in Fig. 2b durch die Bahn beschriebener Vorwärtszug 20 mit vollem Lenkeinschlag Richtung Ausparkseite durchgeführt (s. Schritt 120).

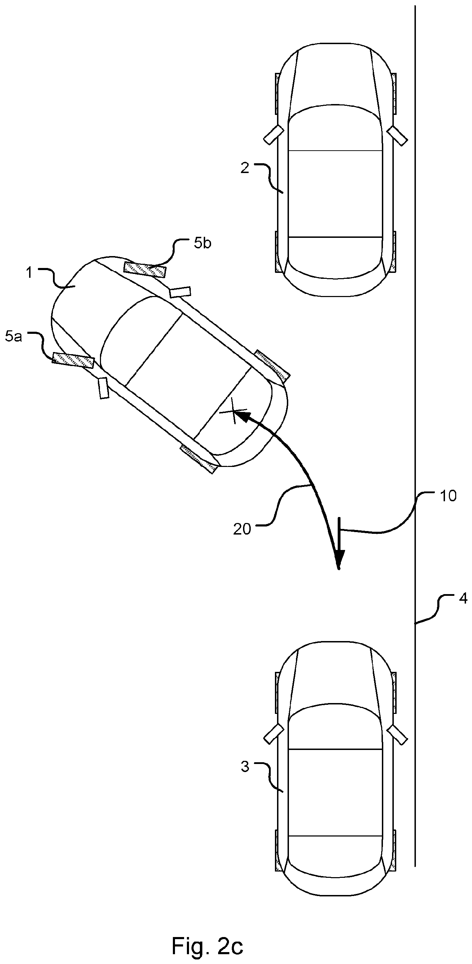

In Fig. 2c ist die Situation nach Ende des Vorwärtszugs 20 dargestellt.

Während des Vorwärtszugs 20 oder unmittelbar nach Ende des Vorwärtszugs wird in der Abfrage 130 geprüft, ob das Fahrzeug 1 die Längsparklücke nach einem zukünftigen geraden Rückwärtszug durch einen daran anschließenden manuellen Vorwärtszug mit Volleinschlag der Räder 5a, 5b Richtung Ausparkseite verlassen könnte, d. h. ob das Fahrzeug 1 nach einem (zukünftigen) geraden Rückwärtszug und einem daran anschließenden Volleinschlag der Räder 5a, 5b das vordere Fahrzeug 2 unter Einhaltung eines vorgegebenen Sicherheitsabstands in einem seitens des Fahrers manuell durchgeführten Vorwärtszug passieren kann. Die Prüfung findet also vor dem etwaig durchgeführten geraden Rückwärtszug statt.

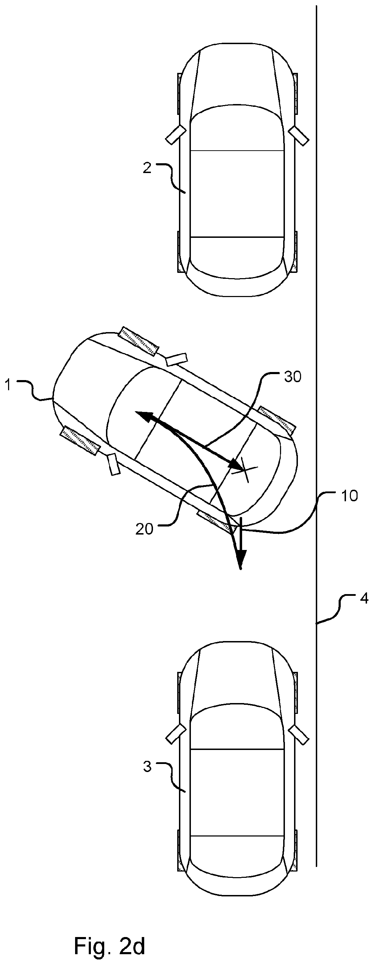

Wenn dies der Fall ist, wird - nach Umschalten der Fahrtrichtung und Geradestellen der Räder 5a, 5b - der in Fig. 2d dargestellte gerade Rückwärtszug 30 seitens des Parkassistenzsystems durchgeführt (s. Schritt 140). In Fig. 2d ist das Fahrzeug bereits in der Position nach Ende des geraden Rückwärtszugs dargestellt. Bei dem geraden Rückwärtszug wird das Fahrzeug beispielsweise so weit zurückgesetzt, bis ein vorgegebener Schwellwert für den Abstand zum Bordstein 4 erreicht oder unterschritten wird.

Wenn das Ergebnis der Prüfung in Schritt 130 negativ ist, wird ein Rückwärtszugs mit vollem Lenkeinschlag entgegen der Richtung der Ausparkseite durchgeführt (s. Schritt 150 oder alternativ Schritt 160). Hierbei wird zwischen zwei Fällen unterschieden:
Wenn in einer Prüfung gemäß Schritt 135 festgestellt wird, dass die Parklücke nach einem zukünftigen Rückwärtszug mit Volleinschlag entgegen der Richtung der Ausparkseite in einem manuellen Vorwärtszug mit Volleinschlag Richtung Ausparkseite verlassen werden könnte, wird der Rückwärtszug mit vollem Lenkeinschlag durchgeführt (s. Schritt 150); in diesem Fall ist dieser Zug der letzte Zug des automatisierten Fahrmanövers.

Wenn hingegen die Prüfung gemäß Schritt 135 negativ ausfällt, ist nach dem dann ausgeführten Rückwärtszug mit Volleinschlag (s. Schritt 160) ein weiterer Vorwärtszug (s. Schritt 120) nötig, an den sich im Ablauf von Fig. 1 immer ein Rückwärtszug anschließt.

Nach Beendigung des geraden Rückwärtszugs gemäß Schritt 140 oder des Rückwärtszugs gemäß 150 werden die Räder in den Volleinschlag Richtung Ausparkseite gelenkt (s. Schritt 170) und dann das Fahrzeug 1 an den Fahrer übergeben.

Hierzu wird in Schritt 180 eine Meldung über die erfolgreiche Beendigung des automatisierten Parkmanövers auf dem Bildschirm im Cockpit eingeblendet und das Fahrzeug aktiv durch das Parkassistenzsystem festgebremst, damit das Fahrzeug nicht losrollt. Gleichzeitig wird die Lenkung im Volleinschlag gehalten, um ein Öffnen / Entspannen der Lenkung zu verhindern. In diesem Zustand kann der Fahrer mit einer einfachen Betätigung des Fahrpedals die Führung des Fahrzeugs übernehmen. Wenn in Schritt 190 festgestellt wird, dass der Fahrer die Führung des Fahrzeugs 1 durch Betätigung des Fahrpedals übernehmen will, führt die Betätigung des Fahrpedals dazu, dass das Bremsmoment langsam zurückgenommen wird, um ein komfortables Anfahrverhalten zu gewährleisten (s. Schritt 200). Ferner wird in Schritt 200 auch das Lenkmoment zurückgenommen. Wenn der Fahrer nicht innerhalb der Zeitdauer Δt (z. B. Δt = 5s) die Führung des Fahrzeugs 1 durch Betätigung des Fahrpedals übernimmt, wird das Fahrzeug über Einlegen der Fahrstufe P gesichert (s. Schritt 210) und die Funktion beendet.

Bei der in Fig. 1 dargestellten Funktionsweise wird als letzter Ausparkzug immer ein Rückwärtszug durchgeführt, entweder als gerader Rückwärtszug (s. Schritt 140) oder als gelenkter Rückwärtszug (s. Schritt 135).

Es wäre denkbar, auf die Abfrage 135 zu verzichten und bei einem negativen Prüfungsergebnis der Abfrage 130 den Rückwärtszug mit Volleinschlag gemäß Schritt 160 durchzuführen. In diesem Fall wäre der letzte Zug des automatisierten Ausparkmanövers immer ein gerader Rückwärtszug (der Schritt 150 würde entfallen).

## Patentansprüche

1. Parkassistenzsystem für ein Kraftfahrzeug (1), zum automatisierten Ausparken mit zumindest automatisierter Querführung aus einer Längsparklücke, wobei der automatisierte Ausparkvorgang mehrere Ausparkzüge (10, 20, 30) umfasst, und das Parkassistenzsystem eingerichtet ist,
- vor der Übergabe an den Fahrer als letzten Zug des automatisierten Ausparkvorgangs einen im Wesentlichen geraden Rückwärtszug (30) automatisiert durchzuführen, um das Kraftfahrzeug (1) tiefer in die Parklücke zu positionieren, und
- danach an den Fahrer zu übergeben.

2. Parkassistenzsystem nach Anspruch 1, wobei das Parkassistenzsystem eingerichtet ist,
- vor dem automatisiert durchgeführten im Wesentlichen geraden Rückwärtszug (30) festzustellen, dass das Fahrzeug (1) nach dem zukünftigen, automatisiert durchgeführten Rückwärtszug (30) einzügig in einem vom Fahrer manuell durchgeführten Vorwärtszug unter Einhaltung eines Abstandskriteriums die Parklücke verlassen können wird,
- in diesem Fall den im Wesentlichen geraden Rückwärtszug (30) automatisiert durchzuführen.

3. Parkassistenzsystem nach Anspruch 2, wobei das Parkassistenzsystem eingerichtet ist, in einem automatisiert durchgeführten Vorwärtszug (20) vor dem automatisiert durchgeführten im Wesentlichen geraden Rückwärtszug (30) oder nach Ende dieses Vorwärtszugs (20) festzustellen, dass das Fahrzeug (1) nach dem automatisiert durchgeführten im Wesentlichen geraden Rückwärtszug (30) einzügig in einem vom Fahrer manuell durchgeführten Vorwärtszug unter Einhaltung eines Abstandskriteriums die Parklücke verlassen können wird.

4. Parkassistenzsystem nach einem der Ansprüche 2 bis 3, wobei das Parkassistenzsystem eingerichtet ist, vor dem automatisiert durchgeführten im Wesentlichen geraden Rückwärtszug (30) festzustellen, dass das Fahrzeug (1) nach dem automatisiert durchgeführten geraden Rückwärtszug (30) einzügig in einem vom Fahrer manuell durchgeführten Vorwärtszug unter Einhaltung eines Abstandskriteriums und unter Berücksichtigung eines bestimmten Lenkeinschlags in Richtung der Ausparkseite, insbesondere eines Volleinschlags in Richtung der Ausparkseite, die Parklücke verlassen können wird.

5. Parkassistenzsystem nach einem der Ansprüche 2 bis 4, wobei das Parkassistenzsystem eingerichtet ist,
- festzustellen, dass das Fahrzeug (1) die Parklücke nach dem automatisiert durchgeführten im Wesentlichen geraden Rückwärtszug einzügig in einem vom Fahrer manuell durchgeführten Vorwärtszug unter Einhaltung eines Abstandskriteriums nicht verlassen können wird,
- in diesem Fall statt des im Wesentlichen geraden Rückwärtszugs (30) einen Rückwärtszug mit Lenkeinschlag (5a, 5b) entgegen der Ausparkseite automatisiert durchzuführen.

6. Parkassistenzsystem nach Anspruch 5, wobei das Parkassistenzsystem eingerichtet ist,
- festzustellen, dass das Fahrzeug (1) die Parklücke nach dem automatisiert durchgeführten im Wesentlichen geraden Rückwärtszug (30) einzügig in einem vom Fahrer manuell durchgeführten Vorwärtszug unter Einhaltung eines Abstandskriteriums nicht verlassen können wird, jedoch nach einem mit einem bestimmten Lenkeinschlag entgegen der Ausparkseite durchgeführten Rückwärtszug in einem vom Fahrer manuell durchgeführten Vorwärtszug unter Einhaltung eines Abstandskriteriums verlassen können wird,
- in diesem Fall den Rückwärtszug mit Lenkeinschlag (5a, 5b) entgegen der Ausparkseite als letzten Zug des automatisierten Ausparkmanövers automatisiert durchzuführen, und
- danach an den Fahrer zu übergeben.

7. Parkassistenzsystem nach einem der vorhergehenden Ansprüche, wobei das Parkassistenzsystem eingerichtet ist, zum Ende des automatisiert durchgeführten im Wesentlichen geraden Rückwärtszugs (30) hin oder nach Beendigung des Rückwärtszugs (30) in Richtung Ausparkseite zu lenken, insbesondere in den Volleinschlag.

8. Parkassistenzsystem nach einem der vorhergehenden Ansprüche, wobei das Parkassistenzsystem ein Parkassistenzsystem zum automatisierten Ausparken mit automatisierter Quer- und Längsführung ist.

9. Parkassistenzsystem nach einem der vorhergehenden Ansprüche, wobei das Parkassistenzsystem eingerichtet ist,
- vor der Übergabe an den Fahrer als letzten Zug des automatisierten Ausparkvorgangs immer einen Rückwärtszug (30) automatisiert durchzuführen, und
- danach an den Fahrer zu übergeben.

10. Parkassistenzsystem nach Anspruch 9, wobei das Parkassistenzsystem eingerichtet ist,
- vor dem automatisiert durchgeführten Rückwärtszug (30) festzustellen, dass das Fahrzeug (1) nach dem zukünftigen, automatisiert durchgeführten Rückwärtszug (30) einzügig in einem vom Fahrer manuell durchgeführten Vorwärtszug unter Einhaltung eines Abstandskriteriums die Parklücke verlassen können wird, und
- in diesem Fall den Rückwärtszug (30) als letzten Zug automatisiert durchzuführen.

11. Verfahren zum automatisierten Ausparken mit zumindest automatisierter Querführung aus einer Längsparklücke seitens eines Kraftfahrzeugs (1), wobei der automatisierte Ausparkvorgang mehrere Ausparkzüge (10, 20, 30) umfasst, mit den Schritten:
- vor der Übergabe an den Fahrer, Automatisiertes Durchführen eines im Wesentlichen geraden Rückwärtszugs (30) als letzten Zug des automatisierten Ausparkvorgangs um das Kraftfahrzeug tiefer in die Parklücke (1) zu positionieren, und
- danach Übergeben an den Fahrer.

12. Software mit Programmcode zur Durchführung des Verfahrens nach Anspruch 11, wenn die Software auf einer softwaregesteuerten Einrichtung abläuft.

## Claims

1. Parking assistance system for a motor vehicle (1), for automated pulling out using at least automated lateral guiding out of a longitudinal parking space, wherein the automated pulling-out process comprises multiple pulling-out moves (10, 20, 30), and the parking assistance system is designed
- before the transfer to the driver, to automatically carry out an essentially linear reversing move (30) as the last move of the automated pulling-out process, to position the motor vehicle (1) deeper into the parking space, and
- then to transfer to the driver.

2. Parking assistance system according to Claim 1, wherein the parking assistance system is designed
- to determine, before the essentially linear reversing move (30) carried out automatically, that the vehicle (1), after the future reversing move (30) carried out automatically, will be able to leave the parking space continuously in a forward move carried out manually by the driver while maintaining a distance criterion,
- in this case to carry out the essentially linear reversing move (30) automatically.

3. Parking assistance system according to Claim 2, wherein the parking assistance system is designed to determine, in a forward move (20) carried out automatically before the essentially linear reversing move (30) carried out automatically or after the end of this forward move (20), that the vehicle (1), after the essentially linear reversing move (30) carried out automatically, will be able to leave the parking space continuously in a forward move carried out manually by the driver while maintaining a distance criterion.

4. Parking assistance system according to one of Claims 2 to 3, wherein the parking assistance system is designed to determine, before the essentially linear reversing move (30) carried out automatically, that the vehicle (1), after the linear reversing move (30) carried out automatically, will be able to leave the parking space continuously in a forward move carried out manually by the driver while maintaining a distance criterion and in consideration of a specific steering angle in the direction of the pulling-out side, in particular a full steering lock in the direction of the pulling-out side.

5. Parking assistance system according to any one of Claims 2 to 4, wherein the parking assistance system is designed
- to determine that the vehicle (1), after the essentially linear reversing move carried out automatically, will not be able to leave the parking space continuously in a forward move carried out manually by the driver while maintaining a distance criterion,
- in this case, instead of the essentially linear reversing move (30), to carry out a reversing move automatically having steering angle (5a, 5b) against the pulling-out side.

6. Parking assistance system according to Claim 5, wherein the parking assistance system is designed
- to determine that the vehicle (1), after the essentially linear reversing move (30) carried out automatically, will not be able to leave the parking space continuously in a forward move carried out manually by the driver while maintaining a distance criterion, but will be able to leave, after a reversing move carried out using a specific steering angle against the pulling-out side, in a forward move carried out manually by the driver while maintaining a distance criterion,
- in this case, to carry out the reversing move having steering angle (5a, 5b) against the pulling-out side as the last move of the automated pulling-out maneuver automatically, and
- then to transfer to the driver.

7. Parking assistance system according to any one of the preceding claims, wherein the parking assistance system is designed, at the end of the essentially linear reversing move (30) carried out automatically or after ending the reversing move (30), to steer in the direction of the pulling-out side, in particular in full steering lock.

8. Parking assistance system according to any one of the preceding claims, wherein the parking assistance system is a parking assistance system for automated pulling out using automated lateral and longitudinal guiding.

9. Parking assistance system according to any one of the preceding claims, wherein the parking assistance system is designed
- before the transfer to the driver, to always carry out a reversing move (30) automatically as the last move of the automated pulling-out process, and
- then to transfer to the driver.

10. Parking assistance system according to Claim 9, wherein the parking assistance system is designed
- to determine, before the reversing move (30) carried out automatically, that the vehicle (1), after the future reversing move (30) carried out automatically, will be able to leave the parking space continuously in a forward move carried out manually by the driver while maintaining a distance criterion, and
- in this case to carry out the reversing move (30) automatically as the last move.

11. Method for automated pulling out using at least automated lateral guiding out of a longitudinal parking space on the part of a motor vehicle (1), wherein the automated pulling-out process comprises multiple pulling-out moves (10, 20, 30), having the following steps:
- before the transfer to the driver, automatically carrying out an essentially linear reversing move (30) as the last move of the automated pulling-out process to position the motor vehicle deeper into the parking space (1), and
- then transferring to the driver.

12. Software having program code for carrying out the method according to Claim 11 when the software runs on a software-controlled device.

## Revendications

1. Système d'aide au stationnement d'un véhicule automobile (1), ledit système permettant la sortie de stationnement automatisée avec au moins un guidage latéral automatisé à partir d'une place de stationnement longitudinale, le processus de sortie de stationnement automatisée comprenant plusieurs mouvements de stationnement (10, 20, 30), et le système d'aide au stationnement étant conçu pour
- effectuer de manière automatisée un mouvement vers l'arrière sensiblement rectiligne (30) comme dernier mouvement du processus de sortie de stationnement automatisée avant d'effectuer le transfert au conducteur afin de positionner le véhicule (1) plus profondément dans la place de stationnement, et
- effectuer ensuite le transfert au conducteur.

2. Système d'aide au stationnement selon la revendication 1, le système d'aide au stationnement étant conçu pour
- déterminer avant le mouvement vers l'arrière sensiblement rectiligne (30) effectué de manière automatisée que le véhicule automobile (1) peut quitter la place de stationnement en respectant un critère de distance en un seul mouvement dans un mouvement vers l'avant effectué par le conducteur après le futur mouvement vers l'arrière (30) effectué de manière automatisée,
- effectuer dans ce cas de manière automatisée le mouvement vers l'arrière sensiblement rectiligne (30).

3. Système d'aide au stationnement selon la revendication 2, le système d'aide au stationnement étant conçu pour déterminer dans un mouvement vers l'avant (20) effectué de manière automatisée avant le mouvement vers l'arrière sensiblement rectiligne (30) effectué de manière automatisée ou après la fin de ce mouvement vers l'avant (20) que le véhicule (1) après le mouvement vers l'arrière sensiblement rectiligne (30) effectué de manière automatisée pourra quitter la place de stationnement en un seul mouvement lors d'un mouvement vers l'avant effectué manuellement par le conducteur en respectant un critère de distance.

4. Système d'aide au stationnement selon l'une des revendications 2 à 3, le système d'aide au stationnement étant conçu pour déterminer avant le mouvement vers l'arrière sensiblement rectiligne (30) effectué de manière automatisée que, après le mouvement vers l'arrière rectiligne (30) effectué de manière automatisée, le véhicule (1) pourra quitter la place de stationnement en un seul mouvement dans un mouvement vers l'avant effectué manuellement par le conducteur tout en respectant un critère de distance et en tenant compte d'un angle de braquage déterminé en direction du côté de la sortie de stationnement, notamment un braquage complet en direction du côté de la sortie de stationnement.

5. Système d'aide au stationnement selon l'une des revendications 2 à 4, le système d'aide au stationnement étant conçu pour
- déterminer que, après le mouvement avers l'arrière sensiblement rectiligne effectué de manière automatisée, le véhicule (1) ne pourra pas quitter la place de stationnement en un seul mouvement dans un mouvement vers l'arrière effectué manuellement par le conducteur en respectant un critère de distance,
- dans ce cas, au lieu du mouvement vers l'arrière sensiblement rectiligne (30), effectuer de manière automatisée un mouvement vers l'arrière avec un angle de braquage (5a, 5b) opposé au côté de sortie de stationnement.

6. Système d'aide au stationnement selon la revendication 5, le système d'aide au stationnement étant conçu pour
- déterminer que, après le mouvement vers l'arrière sensiblement rectiligne (30) effectué de manière automatisée, le véhicule (1) ne pourra pas quitter la place de stationnement en un seul mouvement dans un mouvement vers l'avant effectué manuellement par le conducteur en respectant un critère de distance, mais pourra la quitter, après un mouvement vers l'arrière effectué avec un angle de braquage déterminé opposé au côté de sortie de stationnement, dans un mouvement vers l'avant effectué manuellement par le conducteur en respectant un critère de distance,
- dans ce cas effectuer le mouvement vers l'arrière avec l'angle de braquage (5a, 5b) opposé au côté de sortie de stationnement comme dernier mouvement de la manoeuvre de sortie de stationnement automatisée, et
- effectuer ensuite le transfert au conducteur.

7. Système d'aide au stationnement selon l'une des revendications précédentes, le système d'aide au stationnement étant conçu pour effectuer un braquage, notamment un braquage complet, en direction du côté de sortie de stationnement vers la fin du mouvement vers l'arrière sensiblement rectiligne (30) effectué de manière automatisée ou après la fin du mouvement vers l'arrière (30).

8. Système d'aide au stationnement selon l'une des revendications précédentes, le système d'aide au stationnement étant un système d'aide au stationnement destiné à effectuer une sortie de stationnement automatisée avec un guidage latéral et longitudinal automatisé.

9. Système d'aide au stationnement selon l'une des revendications précédentes, le système d'aide au stationnement étant conçu pour
- toujours effectuer un mouvement vers l'arrière automatisé (30) comme dernier mouvement du processus de sortie de stationnement automatisé avant d'effectuer le transfert au conducteur, et
- effectuer ensuite le transfert au conducteur.

10. Système d'aide au stationnement selon la revendication 9, le système d'aide au stationnement étant conçu pour
- déterminer avant le mouvement vers l'arrière (30) effectué de manière automatisée que, après le futur mouvement vers l'arrière (30) effectué de manière automatisée, le véhicule (1) pourra quitter la place de stationnement en un seul mouvement dans un mouvement vers l'avant effectué manuellement par le conducteur tout en respectant un critère de distance, et
- effectuer dans ce cas de manière automatisée le mouvement vers l'arrière (30) comme dernier mouvement.

11. Procédé de sortie de stationnement automatisée avec au moins un guidage latéral automatisé à partir d'une place de stationnement longitudinale par un véhicule automobile (1), le processus de sortie de stationnement automatisé comprenant plusieurs mouvements de sortie de stationnement (10, 20, 30), ledit procédé comprenant les étapes suivantes :
- effectuer de manière automatisée, avant le transfert au conducteur, un mouvement vers l'arrière sensiblement rectiligne (30) comme dernier mouvement du processus de sortie de stationnement automatisé afin de positionner le véhicule automobile plus profondément dans la place de stationnement (1), et
- effectuer ensuite le transfert au conducteur.

12. Logiciel comprenant un code de programme destiné à mettre en œuvre le procédé selon la revendication 11, lorsque le logiciel est exécuté sur un dispositif commandé par logiciel.
